# EUROPEAN PATENT SPECIFICATION

(11) **EP 2 549 714 B1**
(45) Date of publication and mention of the grant of the patent: **25.09.2013**
(21) Application number: 12168791.7
(22) Date of filing: 22.05.2012
(51) Int. Cl.: H04L 29/08, H04M 1/725, H04W 4/02, H04W 8/08

(54) **Method and mobile device for determining a network relationship between mobile devices**
Verfahren und Mobiles Endgerät zur Bestimmung einer Netzwerkbeziehung zwischen mobilen Vorrichtungen
Procédé et terminal mobile pour déterminer une relation de réseau entre des dispositifs mobiles

(30) Priority: 19.07.2011 US 201113135998
(43) Date of publication of application: 23.01.2013
(73) Proprietor: Mitel Networks Corporation, Ottawa, ON K2K 2W7 (CA)
(72) Inventor: Hillier, Peter M., Ottawa, Ontario K2T 0A7 (CA)
(74) Representative: Hewett, Jonathan Michael Richard

(56) References cited:
- WO-A1-2007/063499
- US-A1- 2010 227 594
- JESPER KJELDSKOV: "Just-for-Us: A Context-Aware Mobile Information System Facilitating Sociality", ACM, 2 PENN PLAZA, SUITE 701 - NEW YORK USA, 1 January 2005 (2005-01-01), XP040026719,

## Description

The present invention relates generally to mobile communications, and more particularly, to systems and methods for associating contacts in a mobile communications device contact list with a network.

Many dual-mode mobile phones can seamlessly switch between a WiFi hotspot or other home or enterprise network and a cellular network. For example, a mobile phone can automatically connect to a WiFi network when the mobile phone is in range of the WiFi network, and can activate a voice over IP (VoIP) client to communicate with other phone users by routing calls through the Internet via the WiFi network. VoIP calls made in this manner can bypass the cellular network and are therefore generally less expensive than a comparable call made over the cellular network.

Many mobile phone carriers offer their customers a service where toll-free calls can be made between each other so long as both the calling phone and the recipient phone are located in the same predefined coverage area of the cellular network. Other restrictions often apply, such as limiting toll-free calls to nights and weekends. On the other hand, calls made outside of the coverage area are typically subject to roaming charges. A conventional mobile phone user is not notified of a network status of a called party until the call is made, or proactively accesses the network service provider's webpage for a status of call activity, or receives an invoice from the network service provider.

This problem can be particularly evident to "dynamic network users," or mobile device users transitioning between different networks. For example, consider a guest on a cruise ship who registers a mobile device for access to the ship's WiFi network. One or more of the guest's mobile device contacts may also be on the ship. However, the guest has no knowledge of whether a particular contact is also registered on the ship's WiFi network. Without this information, the guest cannot determine in advance whether a call made to a contact is a free WiFi call or a cellular network call that is laden with roaming charges and/or and international charges.

Some users attempt to determine a contact's status by the use of mobile presence, which is a service offered by AOL®, Facebook®, and the like, allowing a subscriber to accesses the service via an application that is executed on the mobile device, for example, an instant messaging and presence (IM&P) application. A mobile device user can create a contact list, also referred to as a peer list or Buddy ListTM, to identify a contact, more specifically, a contact's mobile device, with which he wishes to communicate. When the mobile device user logs into an account, his contacts can be notified that the user is available for communication. However, any presence-related communications, for example, screen pops, alert notices, or text messages, can result in data roaming charges, SMS roaming charges, and the like when the user roams to another local or international network, for example, a different WiFi hotspot or a different carrier zone. Presence concepts also do not assist a mobile device user with practices such as telecommunications least cost routing (LCR) awareness, which permit a user to select an outbound communication path based on cost. Traditionally, LCR is a function of the call routing system of a telecommunications network. Here, users are generally limited to recordings or tones when notified of expensive route usage.

Another conventional approach includes the use of computer telephone interface (CTI) applications, which can propagate status information such as an "off-hook" or a "dialtone" status that can be displayed on the phone display. From a mobile phone, the user can use DTMF feature access codes or feature access keys to perform a status update, for example, to change the user's status. However, this requires a static configuration, which can prevent this feature from functioning when the user moves to a different network, for example, the abovementioned cruise ship.

Another conventional approach includes the use of location-discovery applications such as Google Latitude.

US2010/227594 relates to a service for associating contacts in a contact list with a location state, wherein proximity is determined using location data and a variety of additional non-geographical attributes.

"Just-for-Us: A Context-Aware Mobile Information System Facilitating Sociality" by Jesper Kjeldskov relates to a system for arranging ad hoc meetings with nearby contacts.

Although these applications can track a user's location, they do not provide network status information.

According to an aspect of the present invention, there is provided a method for determining a network relationship between a mobile device and a contact stored in the mobile device, according to claim 1.

According to another aspect of the present invention, there is provided a mobile device according to claim 11.

Optional features are as set out in the dependent claims.

The foregoing and other objects, features, and advantages of the present invention will be apparent from the detailed description which follows, as illustrated in the accompanying drawings in which like reference characters refer to the same parts throughout the specification and drawings. The drawings are not necessarily drawn to scale, emphasis instead being placed upon illustrating principles of the present invention, wherein:
FIG. 1 is a schematic network diagram illustrating a mobile communications environment in which embodiments of the present invention can be employed;
FIG. 2 is a block diagram illustrating a high-level mobile device architecture, in accordance with an embodiment;
FIG. 3 is a flowchart of a method for associating mobile device contacts with a local network, in accordance with an embodiment;
FIG. 4 is a flowchart of a method for determining whether a contact device is in a local network, in accordance with an embodiment;
FIG. 5 is a screenshot of a mobile device contact list displaying a network status for each contact, in accordance with an embodiment;
FIG. 6 is a flowchart of a method for determining whether a mobile device contact is in a local network, in accordance with another embodiment;
FIG. 7 is a screenshot of a displayed access point list and a screenshot of a mobile device contact list, in accordance with an embodiment; and
FIG. 8 is a flowchart of a method for notifying a mobile device user of contacts in a local network sharing a same application, in accordance with an embodiment.

The description set forth below in connection with the appended drawings is intended as a description of embodiments of the present invention. It is to be understood that the present invention is not limited to the particular structures, process steps, or materials disclosed herein, but is extended to equivalents thereof as would be recognized by those skilled in the relevant arts. It should also be understood that terminology employed herein is used for the purpose of describing particular embodiments only and is not intended to be limiting.

The present invention addresses and overcomes limitations experienced by a conventional dual-mode mobile phone user who cannot distinguish a potential call recipient on the same WiFi network, cellular zone, or other local network as the mobile phone user, from a potential call recipient who is roaming on a different cellular network.

In brief overview, embodiments described herein may address and overcome the abovementioned conventional limitations by presenting information to a mobile device, for example, a cell phone, smart phone, personal digital assistant (PDA), and the like, which permits a user to determine whether a contact in the mobile device contact list is using a mobile phone or other electronic device that is currently at a same local network as the mobile device user. A local network can include a network that is common between two or more users such that any electronic communication between the users, i.e., phone calls, text message, and the like, can occur at a free or reduced rate as compared to a comparable communication via a cellular network, PSTN, or related carrier network. Examples of a local network can include, but not be limited to, a WiFi hotspot, a PBX cluster, or a carrier zone. A mobile device user can also choose whether to accept an incoming call from a contact device based on the contact device's network status, for example, whether the call originates outside of the user's coverage area.

Thus, the mobile device user can be notified in advance of which contact devices are located in networks that permit voice, video, data, and the like to be exchanged with the mobile device free of charge or at a discounted rate. One type of notification includes modifying a visual representation of an element or identifier of a contact record, for example, a frame displayed about a digital icon, for example, a photograph or avatar, corresponding to a mobile device contact on a mobile device, referred to as a contact device. The frame can be modified according to a colour scheme or other form of identification that associates a contact device according to a network status, for example, whether the contact device is at a local network, or at a different network subjecting the mobile device user to roaming charges and the like. For example, a contact device can be identified as being at a local network by a green contact frame, or identified as being at a remote network by a red contact frame, or identified as being in an unknown network by a yellow contact frame. Each contact in a mobile device contact list can be identified as having a distinct network status, along with other traditional contact information such as name, address, phone number, and other related contact information. By highlighting the contact frame with a particular colour, e.g. green, yellow, or red, or other unique identifiers, for example, striped and checkerboard patterns, a contact list can be quickly consulted either from a native contact interface, for example, when initiating or receiving calls. Also, the mobile device user can be notified of which contacts are running a same application as the user. For example, when a contact list is opened from an application such as a videoconferencing application, the mobile device user can establish that a contact can participate in a videoconference by establishing whether the contact is running the same videoconferencing application, permitting the user to communicate with other users of that application. Conventional approaches, on the other hand, require that separate contact lists be provided for each application, which can lead to complexities arising from the mobile device user navigating between applications.

Regardless of whether a contact list is used natively or within an application, the contact list can be augmented with network presence information so that a user's typical call-related actions, e.g., pressing contact buttons, scrolling to the selected contact, pressing the dial button, and the like, can also provide an indication in advance of whether or not the call is subject to any charges.

In another embodiment, a mobile device user can select via the mobile phone interface a default colour for a particular network, for example, a WiFi network or a cellular network. Mobile devices are often configured with an application that presents a list of access points and carrier information so that the user can select a favorite WiFi hotspot and the like. This feature permits a user to identify each network by a specific colour. The contact frames can be modified to have a colour that matches the network colour so that the mobile device, when active on multiple networks, can determine which contacts are currently located in local networks.

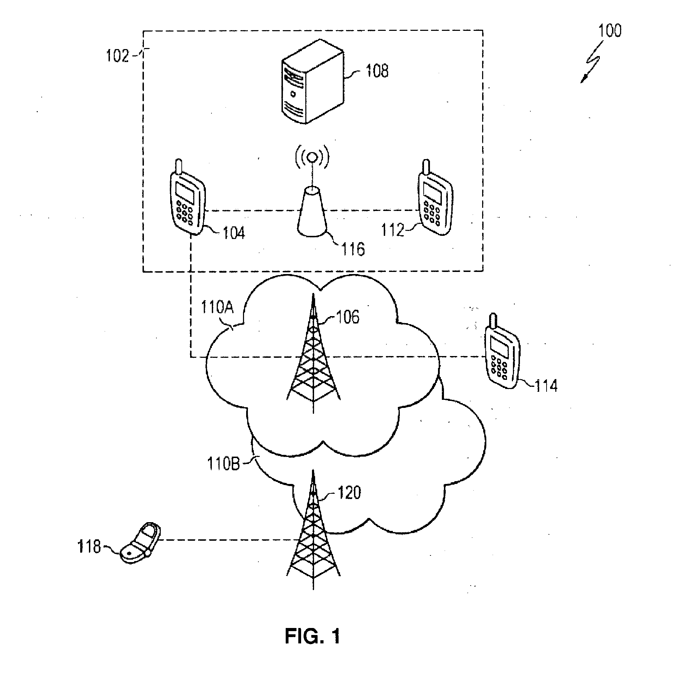

FIG. 1 is a schematic network diagram illustrating a communications environment 100 in which embodiments of the present invention can be employed. The communications environment 100 includes a WiFi network 102 in communication with a first communications network 110A and a second communications network 110B (generally, 110). It should be appreciated that the WiFi network 102 and the communications networks 110 are shown by way of example and are not intended to limit the invention. For example, although a WiFi network 102 is shown, the systems and methods described herein can be applied to other local networks, such as a Picocell network or other wireless local area network (WLAN), a PBX cluster, or other alternative network source. The communications networks 110 can include cellular networks 106,120, and/or other public or private networks such as a mobile voice network, a mobile data network, a public switched telephone network (PSTN), a satellite network such as the Global Positioning System (GPS), the Internet, and the like, or a combination thereof, or any other network known to those of ordinary skill in the art as being capable of exchanging voice, data, and/or video or a combination thereof with other elements of the communications environment 100 and/or other local, nationwide, or international locations.

Registration server 108 can be deployed in a call routing network, for example, a PBX cluster, a carrier zone, or other regional area of coverage, for tracking registered users in a local network, for example, the WiFi network 102. Registration server 108 can alternatively reside anywhere in the communications network 110, for example, on the Internet, and be reachable from any electronic device having a network connection. Registration server 108 can therefore be accessible from one or more different networks for providing network status information for those devices active on those networks.

Registration server 108 can communicate with other network computing systems or telephony systems known to those of ordinary skill in the art for establishing voice, video, and/or data connections between users, such as private branch exchange (PBX) systems, routers, switches, WiFi devices, SIP proxy servers, telecommunications systems, and the like. An exemplary telephony system can include features that permit calls to be routed within an internal network, for example, WiFi network 102, to reduce or eliminate costs associated with using the cellular network.

Registration server 108 can also communicate with application-specific devices, for example, a property management system (PMS) or other system participating in the registration of mobile devices for access to the WiFi network 102.

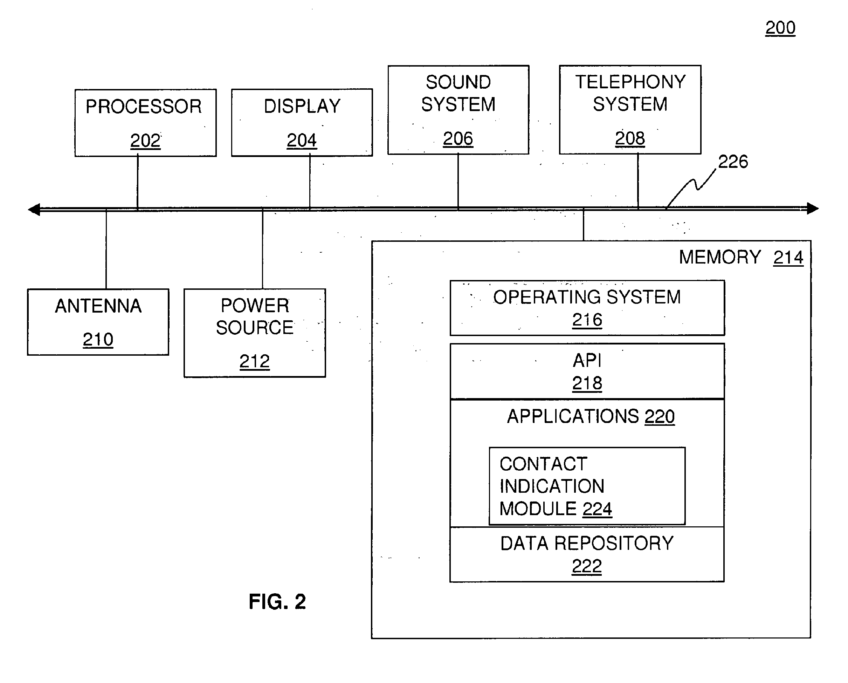

Registration server 108 can track mobile devices, which are registered with registration server 108, to determine whether they are on the WiFi network 102 and/or the communications network 110. Other mobile devices can be registered with registration server 108 even though they are not currently on the WiFi network 102, for example, mobile device 114. Registration server 108 can be configured to track users on multiple WiFi networks and/or carrier networks simultaneously. In this manner, mobile device 104 can query registration server 108 to determine which contacts are presently communicating with the WiFi network 102. Registration server 108 can include a list of applications 220 (see e.g., Fig. 2) corresponding to the mobile device 104, which can be used by the mobile device 104 to determine whether the registered devices of the users include one or more of the applications.

Mobile device 104 can query registration server 108 to determine which contacts are local to mobile device 104 based on Internet calling. For example, a contact device may be located at a different WiFi network than the WiFi network 102 but connected to the Internet. Mobile device 104 can also query who is reachable on the first communications network 110A, for example, mobile device 114, which is on a cellular network managed by registration server 108, and which contacts are on unknown networks, for example, contact device 118, which is on an unknown network, for example, the second communications network 110B.

One or more mobile devices 104, 112, 114, 118 can be mobile phones, smart phones, personal digital assistants (PDAs), laptop or handheld computers, or other devices that process voice, video, and/or data-related signals. Mobile devices 104, 112, 114, and 118 can initiate phone calls, text messages, instant messages, videoconferencing sessions, or other communications depending on the features offered by the mobile device. One or more mobile devices 104, 112, 114, 118 can communicate with registration server 108 and/or other elements of the communications network 110 in accordance with communication protocols, control protocols, routing protocols, and other forms of electronic delivery known to those of ordinary skill in the art, for example, the session initiation protocol (SIP). In an embodiment, one or more mobile devices 104, 112, 114, 118 are multimodal devices, for example, dual-mode mobile phones, for switching between the WiFi network 102 and the communications network 110, and exchanging real-time or stored voice, video, and/or data via the WiFi network 102 and/or the communications networks 110 depending on location or proximity of mobile devices to the WiFi network 102. For example, mobile device 104 can have some calls routed via the WiFi network 102, for example, to mobile device 112, and have other calls routed via the cellular network 110, for example, to mobile device 118. Mobile devices 104, 112_{,} 114 can register with the WiFi network 102 in a manner known to those of ordinary skill in the art, for example, a wireless local area network (WLAN) connection.

Mobile devices 104, 112 can communicate with a wireless access point 116 when in a WiFi VoIP mode, or communicate with the first communications network 110A, for example, cellular network 106 of the first communications network 110A when in a cellular mode. Mobile device 114 can communicate with the first communications network 110A, for example, cellular network 106 of the first communications network 110A. Mobile device 118 can communicate with the second communications network 110B, for example, a cellular network 120, or a WiFi hotspot, a PBX cluster, or other local network. The second communications network 110B can include the Internet. Thus, where mobile devices 114 and 118 are both on a same network where calls can be placed to each other free of charge, registration server 108 can establish that mobile devices 114 and 118 can place free calls to each other. In this manner, the contact list of mobile device 114 can indicate that mobile device 118 can be contacted free of charge, for example, by presenting a green contact frame.

FIG. 2 is a block diagram illustrating a high-level mobile device architecture 200 in which embodiments of the present invention can be employed. Although the mobile device architecture 200 is shown as referring to mobile device 104, mobile device architecture 200 can apply to one or more other mobile devices 112, 114, 118. The architecture 200 includes a processor 202, for example, a central processing unit (CPU), a display 204, a sound system 206, a telephony system 208, an antenna 210, a power source 212, and a memory device 214, which can communicate with each other over a system bus 226 known to those of ordinary skill in the art, for example, a peripheral component interconnect (PCI) bus. While not shown, the architecture can include other components such as inputs and outputs known to those of ordinary skill in the art for entering data or receiving data in accordance with one or more communication modes, for example, text, graphical images, video, and the like.

The display 204 can be a touch-sensitive graphical display such as a liquid crystal display (LCD) screen. The display 204 can include a graphical user interface (GUI) that presents textual/or and graphical images to the display 204, for example, icons, dialog boxes, menus, buttons, cursors, scroll bars, and other elements known to those of ordinary skill in the art. Elements of the textual/or and graphical images can be arranged in predefined layouts on the display 204, for example, to form a virtual keyboard.

The sound system 206 can include a speaker, a microphone, and other communication elements for converting speech into electrical signals and/or converting electrical signals into sound.

The telephony system 208 can transmit and receive sound over the communications network 110. The antenna 210 can transmit and receives signal for communication between mobile device 104 and the communications network 110, for example, cellular network 106, which can exchange voice, data, and/or video or a combination thereof between the mobile device to other electronic devices in communication with the communications environment 100 and/or with electronic devices located at other local, nationwide, or international locations. Alternatively, the architecture 100 can include a connector (not shown) known to those of ordinary skill in the art for communicating with one or more of the abovementioned networks.

The memory device 214 can store computer instructions and/or data in the form of program code corresponding to an operating system 216, an application program interface (API) 218, one or more applications 220, and a data repository 222, a graphical user interface (GUI) (not shown), and other application programs known to those of ordinary skill in the art, which can be processed by the processor 202.

The operating system 216 can be a LINUX®-based operating system or other commercially available or proprietary operating system for computers or embedded systems, for example, iOS, Blackberry OS, Android OS, and the like. The operating system 216 can communicate with the API 218 or other frame function access mechanism for highlighting or changing the physical appearance of a contact element, for example, a frame surrounding a contact icon in a contact list, in response to signal provided by a contact indication module 224 described herein.

The applications 220 can include one or more application programs including but not limited to a web browser, a dialer application, an address book application, a VoIP client application such as a SIP client, an email application, an IM&P application, a WiFi access point manager, and/or other application programs known to those of ordinary skill in the art.

The contact indication module 224 can modify a dynamic visual representation of a contact record, for example, a contact element such as a frame displayed about a digital icon, for example, a photograph or avatar, corresponding to a mobile device contact. The contact frame or other contact element can be modified by changing the colour of the frame according to a contact device's current network status. The contact indication module 224 enables a user to establish a network status such by determining from the coloured frame whether a contact device is at a local network, or at a different network subjecting the mobile device user to roaming charges and the like. The contact indication module 224 can communicate with parental control applications and the like to prevent calls from being made to contacts on toll networks and the like.

The data repository 222 can store contact lists, contact visual representation data associated with the contact lists, as well as web data, for example, used in rendering a web page in the web browser, or other data applicable related to the contact indication module 224.

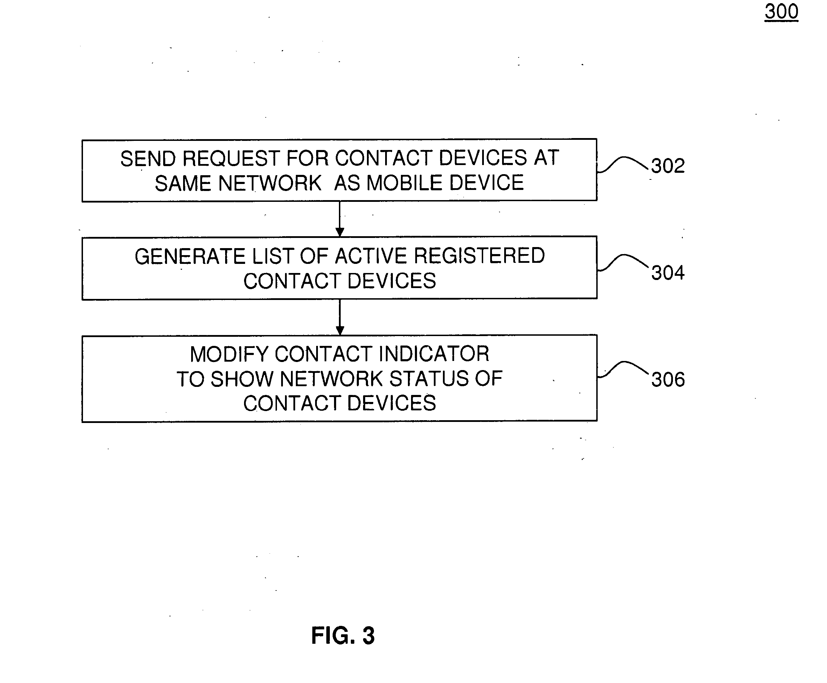

FIG. 3 is a flowchart of a method 300 for identifying mobile device contacts having a network relationship with the mobile device, in accordance with an embodiment. In describing the method 300, reference is also made at least to mobile device 104 and/or mobile devices 112, 114, 118, also referred to as contact devices, described with reference to FIG. 1 and the mobile device architecture 200 described with reference to FIG. 2. The method 300 can be governed by program instructions that are stored in the memory device 214 and are executed by processor 202 of the mobile device architecture 200.

The method 300 can commence before a user of mobile device 104 initiates a communication to a contact on the mobile device contact list or receives an incoming call from a contact. The communication can include a phone call, text message, email message, video communication, and the like. A user can open a contact list on mobile device 104 and search the list for a contact. When the contact list is opened by the mobile device user, each contact's avatar or photo can be displayed along with telephone numbers or other contact identifiers such as name, address, and the like stored in the data repository 222. The contact list can be in communication with a phone dialer application, email application, IM application, and the like. Thus, when the user selects a contact as a called party, the dialer can be activated to place a call to a destination phone number, SIP address, and the like of the selected contact. The dialer can be activated when mobile device 104 is in a cellular mode or a VoIP mode.

An application 220 can reside in the background and periodically poll registration server 108, for example, when a contact device enters or exits a network. The application 220 provides status information regarding a network status of mobile device 104, for example, reporting a currently active network or networks, to registration server 108 so that a query can provide a current snapshot of network status information corresponding to those contacts who are also running the application. As shown in FIG. 2, the application 220 may run on the device. In other embodiments, the application can be executed at the network level, for example, a server monitoring the presence or absence of mobile devices on its network and reporting on behalf of registered devices to registration server 108. Registration server 108 can collate the information from several inputs, e.g., carriers, WiFi networks, etc., to create a master list to identify the network location of devices of interest. A user can initiate a request the information, for example, via activation from the user interface. Alternatively, the information can be automatically retrieved, for example, by an auto-request.

Alternatively, the method 300 can commence in response to receipt of a call request from a contact. For example, the method 300 can be applied to determine a network associated with the caller. For example, the method 300 can be applied to establish that a calling party, for example, mobile device 112, is actively present in a same WiFi network 102 as mobile device 104. When mobile device 104 receives the incoming call, text message, and the like, a contact record corresponding to the contact device 112 can be displayed along with an audio or visual indicator, for example, a contact frame, that identifies the caller, i.e., the contact device 112, as being in the same WiFi network 102, i.e., a toll-free network. This information can also be displayed on a commercially-available application such as the Peek-a-who email notification application, for example, when an incoming call subjects the user to international roaming charges, or where carriers bill their customers based on the upload or download of data.

At block 302, mobile device 104 can request a list of mobile devices associated with contacts on the contact list that are at a same network as mobile device 104. The request can be generated by mobile device 104 when the contact list is opened, for example, prior to an outbound call, or when mobile device 104 receives an inbound call.

The request can be made to registration server 108, which tracks mobile devices currently logged into the WiFi network 102, for example, VoIP clients who register with a phone exchange system or cluster when a WiFi-related signal is detected. Registration server 108 can determine whether a registered mobile device is presently active in the WiFi network 102. The request can include a user identifier associated with each contact on the mobile device contact list such as a phone number, IP address, SIP address, or any other network unique identifier used to reach the contact on a given network.

At block 304, registration server 108 can generate a list of active registered contact devices from the request which are on the contact list. Registration server 108 can track a current location of the contact to determine if a contact is active on the WiFi network 102 or on another network such as the communications network 110, or inactive, for example, powered down. Registration server 108 can generate a list of users of the WiFi network 102 and/or the communications network 110 determined to be active and compare this list with the list of contacts provided with the request from mobile device 104. A set of users determined to be active and identified on the contact list can be generated, and output to mobile device 104. Accordingly, a list of all contacts corresponding to any network, for example, the WiFi network 102 and/or the communications network 110 can be retrieved.

At block 306, a contact indicator corresponding to a contact on the contact list can be modified in response to the result received from registration server 108. The contact indicator can include a contact frame which is positioned about an icon such as a photo, avatar, and the like corresponding to the contact. In an embodiment, the contact frame is modified to display a colour corresponding to a network status of the corresponding contact mobile device. The size, shape, colour, or other characteristic of the contact frame can be modified depending on the network relationship between the mobile device and the contact device, for example, modified to be green when the mobile device and the contact device are at the same local network.

For example, mobile device 104 can have a contact list that includes contact devices 112, 114, and 118. The contact frame corresponding to mobile device 112 can be displayed as green, indicating that the contact device 112 is on the same Wifi network 102 as mobile device 104. On the other hand, the contact frame corresponding to mobile device 114 can be displayed as red, indicating that the contact device 114 is on a network, i.e., first communications network 110A, that subjects mobile device 104 to toll charges, or indicating that the contact has elected to be seen as unreachable for privacy reasons, for example, selecting a do not disturb (DND) button, for displaying the contact frame in red. The contact frame corresponding to mobile device 118 can be displayed as yellow, indicating that mobile device 118 is on an unknown network, i.e., second communications network 110B. Thus, at anytime the user of mobile device 104 can open a contact list and determine by a user-defined colour scheme or other type of indicator who can be reached in the WiFi network 102, or who can be reached on the first communications network 110A, for example, when mobile device 104 and contact device 112 are presently located on the same cell zone at the first communications network 110A.

In addition, if mobile device 104 is connected to both the WiFi network 102 and the communications network 110, for example, the Internet or a carrier zone, those contacts identified as being on the WiFi network 102 can be displayed in a green contact frame as well as those contacts on the communications network 110 which are subject to free or discounted calls, for example, contacts who are on the same carrier network during nights and weekends. Mobile device 104 can therefore display contacts from multiple networks, and can place calls to these networks on a contact-by-contact basis, for example, VoIP calls to some contacts and cellular calls to other contacts.

The contact network status can be used as an indicator to the phone application with regard to which contact number to use. For example, the contact may have a SIP number, cell number, and home number listed. In this case, if the contact indicator displays a green frame, this can suggest that, since the contact is on the same network as the user, the contact can be called free of charge, or at a discount relative to a call made to a contact outside of the same network. Thus, network status information displayed in this manner can be used to determine the least-expensive number to call when a contact has several numbers listed for different networks. Here, the registration server 108 can be a global registration server that is registered with users on any or all of these different networks. Mobile device 104 can query the global register 108 to obtain network status information from all of the user's contacts. Alternatively, an application on mobile device 104 can query multiple servers corresponding to different networks, for example, a registration server at the WiFi network 102 registration server and a network server at the carrier network, and collate the results received from both servers.

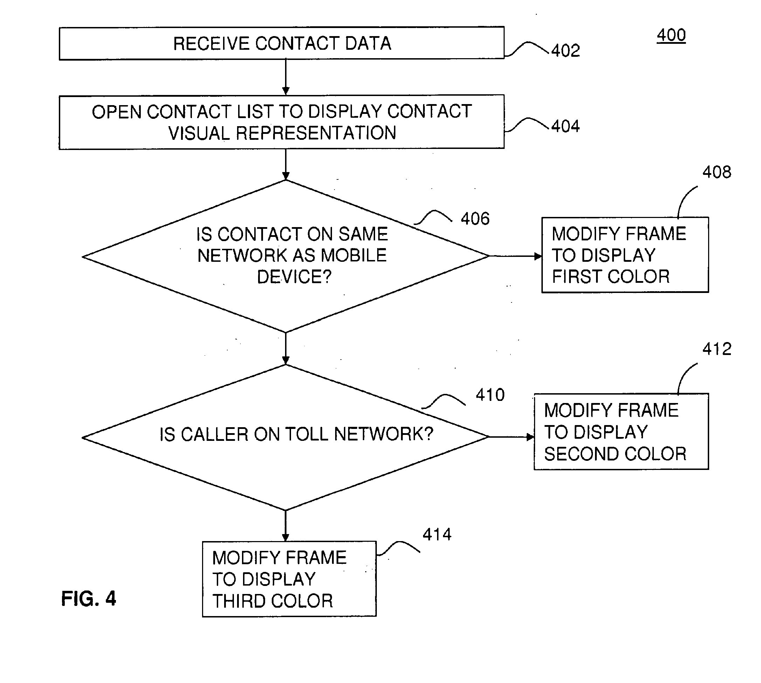

FIG. 4 is a flowchart of a method 400 for determining whether a contact device contact is in a local network, in accordance with an embodiment. In particular, the method 400 determines whether a mobile device and a contact device are presently located at the same network such as WiFi network 102, the same cellular zone coverage area in the first communications network 110A, or on different WiFi networks connected to each other via the Internet or other VoIP network. In describing the method 400, reference is also made at least to mobile device 104 and/or mobile devices 112,114_{,} 118, also referred to as contact devices, described with reference to FIG. 1 and the mobile device architecture 200 described with reference to FIG. 2. The method 400 can be governed by instructions that are stored in the memory device 214 and are executed by processor 202 of the mobile device architecture 200. The method 400 can apply to outbound calls placed from mobile device 104, or to inbound calls received by mobile device 104. For example, inbound calls can display the proper frame colour when a photo or avatar is displayed when an inbound call is received. Here, registration server 108 can receive a query prior to the receipt of the inbound call.

At block 402, a set of contact data is received 402 by mobile device 104, for example, from registration server 108. The contact data can include contact network use information, for example, indicating whether the contact is at a local network. The contact data can be provided in response to a request made by mobile device 104, for example, described above with regard to method 300.

At block 404, a contact list on mobile device 104 can be opened. In doing so, a contact record can be displayed for each contact. The contact record can include a phone number, an address, and related information about the contact. A contact visual representation such as a photo, avatar, or other icon corresponding to the contact can also be displayed. The contact visual representation can colour-code a frame about the contact icon according to the network status of the contact. The contact frame can be changed when the network status changes, for example, when the contact device 112 moves out of the WiFi network 102 to the communications network 110B.

At decision block 406, if the contact data reveals that the contact device is at a same network as mobile device 104, then mobile device 104 at block 408 can activate a contact frame feature of the operating system 216, for example, via an API 218, so that the contact frame is displayed having a first colour, for example, green. If the contact device is determined not be on the same network as mobile device 104, for example, mobile device 114, then the method 400 proceeds to decision block 410, where a determination is made, for example, by registration server 108, as to whether the contact device is on a toll network. If yes, then at block 412 the contact frame can be modified to display a second colour, for example, red. If a determination cannot be made as to the network status of the contact device, then at block 414, the contact frame can be modified to display a third colour, for example, yellow, indicating that the network is unknown. Any number of colours could be used to denote various meanings to the end user, or perhaps a special type of frame is used, or some other graphical artifact, to distinguish the type of network the call is using.

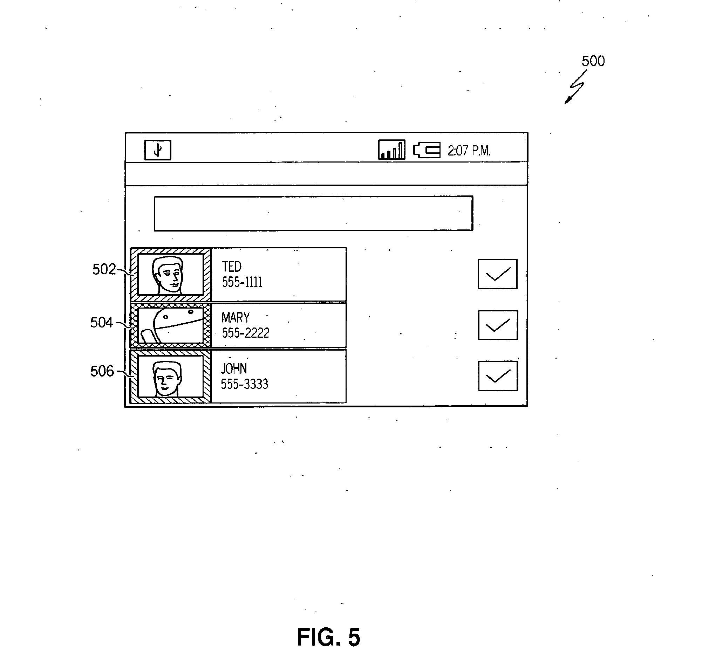

FIG. 5 is a screenshot of a mobile device contact list 500 displaying a network status for each contact device shown in FIG. 1, in accordance with an embodiment. A first contact record (Ted) can correspond to the contact device 112. In particular, the first contact record includes a contact frame 502 positioned about a photo that is modified to show that the contact device 112 is in a local network showing that the contact device 112 is in the WiFi network 102, for example, a green contact frame, or a pattern of diagonal lines as shown in FIG. 5.

A second contact record (Mary) can correspond to the contact device 114 which is at the first communications network 110A. The second contact record includes a contact frame 504 positioned about a Droid contact avatar. The contact frame 504 is displayed as a red frame, or a checkerboard pattern as shown in FIG. 5, indicating that Mary's contact device 114 is in a toll network, i.e., the first communications network 110A.

The third contact record (John) can correspond to the contact device 118 which is at the second communications network 110B. The third contact record includes a contact frame 506 positioned about a photo. The contact frame 506 is displayed as a yellow frame, or a diagonal pattern as shown in FIG. 5, indicating that the network status of the contact device 118 is unknown. For example, the contact device 118 is not registered with registration server 108, or does not support this network status application, and therefore registration server 108 cannot establish the type of network with which the contact device 118 is in communication.

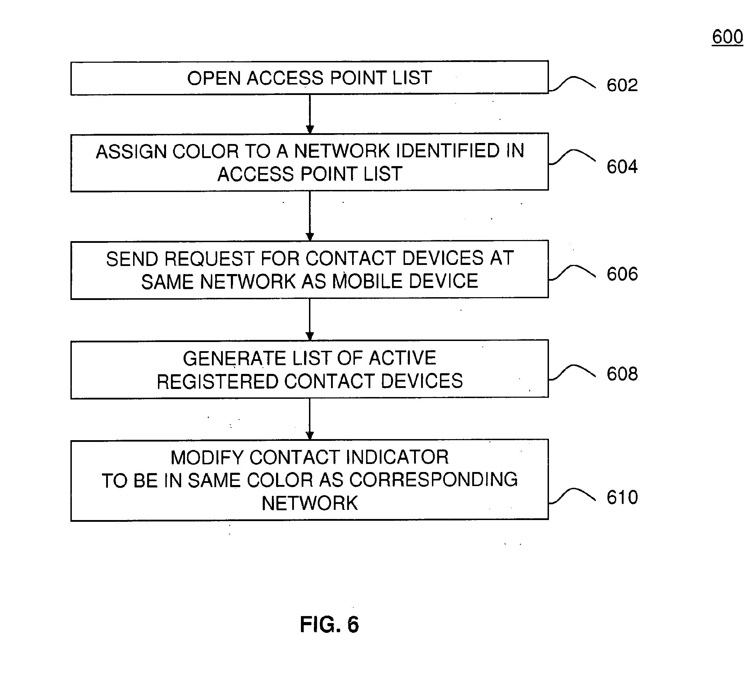

FIG. 6 is a flowchart of a method 600 for determining whether a mobile device contact is in a local network, in accordance with another embodiment. In describing the method 600, reference is also made to FIGs. 1 and 2. The method 600 can be governed by instructions that are stored in the memory device 214 and are executed by processor 202 of the mobile device architecture 200.

At block 602, an access point list is opened in mobile device 104. The access point list can be part of a native application of mobile device 104, and can include information related to WiFi access points, mobile hotspots, and the like such as access point SSID, MAC address, and signal strength.

At block 604, a default colour or other identifier can be assigned to a network identified in the access point list. In embodiments where mobile device 104 is a multimodal device, or otherwise capable of communication with two or more different networks, a different colour or other identifier can be assigned to each network. For example, the colour green can be assigned to the WiFi network 102, and the colour blue can be assigned to the user's cellular network provider, for example, first communications network 110A. The operating system 216, API 218, and/or the GUI (not shown) of the mobile device architecture 200 can be configured to permit colours or other identifiers to be associated with different networks.

At block 606, mobile device 104 can request a list of mobile devices associated with contacts on the contact list that are at a same network as mobile device 104. Block 606 can be similar to block 302 described above, so a detailed description thereof is omitted for reasons related to brevity.

At block 608, a list of contacts is provided to registration server 108. Registration server 108 can track a list of active registered contact devices for each network identified according to a colour. Alternatively, registration server 108 can track users spanning multiple networks. For example, registration server 108 can determine that the contact device 112 is at the WiFi network 102 and the contact device 114 is at the first communications network 110A. Other details of block 608 can be similar to block 304 described above, and are not repeated for reasons related to brevity.

In block 610, a contact indicator can be a frame displaying the same colour as the corresponding network. For example, a contact frame corresponding to the contact device 112 located at the WiFi network 102 can be displayed having the same colour as the colour assigned to the WiFi network 102, i.e., green. In another example, the contact frame corresponding to the contact device 114 can be displayed as blue or the same colour as the colour assigned to the first communications network 110A.

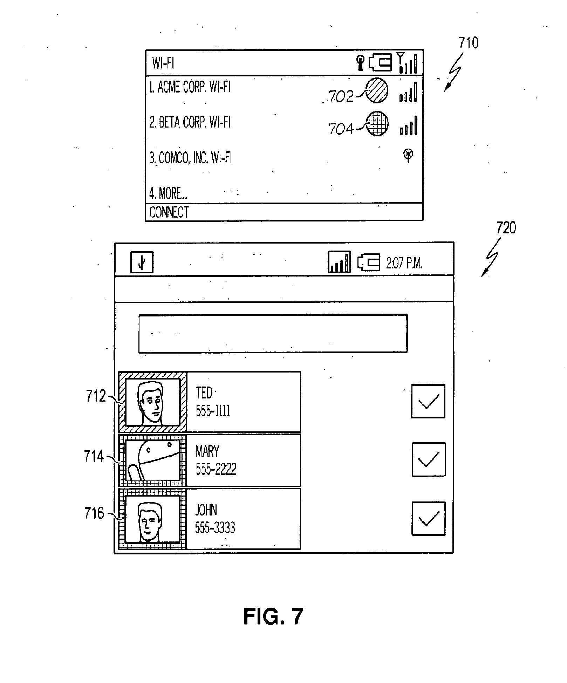

FIG. 7 includes screenshots of a displayed access point list 710 and a mobile device contact list 720, respectively, in accordance with an embodiment. The access point list 710 and the mobile device list 720 can be presented on a user interface of mobile device 104.

The access point list 710 displays a first network name (Acme Corp. WiFi), a second network name (Beta Corp. WiFi), and a third network name (Comco, Inc. WiFi). The access point list 710 includes a user-configurable default indicator 702, for example, the colour green or a pattern of diagonal stripes, that is assigned to the Acme Corp. WiFi network, and a user-configurable default indicator 704, for example, the colour blue or a checkerboard pattern, that is assigned to the Beta Corp. WiFi network. In this manner, any contact devices that are active in the Acme Corp. WiFi network can have a contact record that displays a green contact frame. Similarly, any contact devices that are active in the Beta Corp. WiFi network can have a contact record that displays a blue contact frame. Accordingly, a first contact record (Ted) includes a contact frame 712 positioned about a photo that is coloured green to show that Ted's contact device 112 is at the Acme Corp. WiFi network A second contact record (Mary) includes a contact frame 714 positioned about a Droid contact avatar that is coloured blue to show that Mary's contact device 114 is at the Beta Corp. WiFi network. A third contact record (John) includes a contact frame 716 is coloured blue, indicating that the network status of John's contact device 118 is also at the Beta Corp. WiFi network.

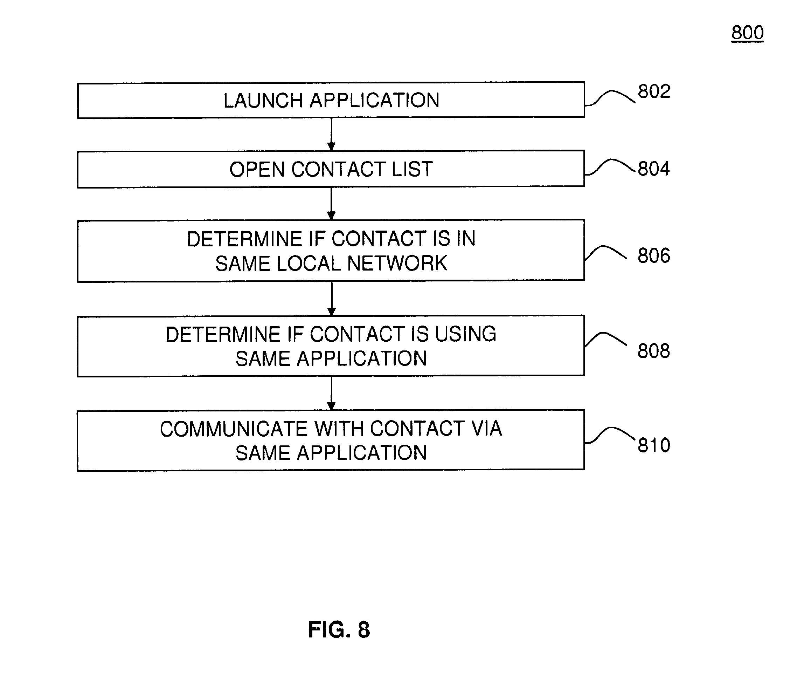

FIG. 8 is a flowchart of a method 800 for notifying a mobile device user of contacts in a local network sharing a same application, in accordance with an embodiment. In describing the method 800, reference is also made to FIGs. 1 and 2. The method 800 can be governed by instructions that are stored in the memory device 214 and are executed by processor 202 of the mobile device architecture 200. Method 800 can be applied where mobile device 104 executes an application and wishes to identify contact device using the same application.

At block 802, a mobile device application is launched from mobile device 104. For example, a shopping application can be activated in mobile device 104 located in a mall that offers a WiFi service.

At block 804, the mobile device user can open a contact list in mobile device 104. The contact list can be a native contact list that communicates with a dialer, IM application, email application, or related application that permits the user to communicate with other electronic devices. The contact list can include a set of contact records. Each record can include contact information such as the contact's phone number, name, address, and/or other contact identifiers. Each record can also include an icon such as an avatar, photo, and the like. A contact frame or other icon can be displayed.

A block 806, a determination can be made as to whether a contact device is in a same local network as mobile device 104. Block 806 can be similar to blocks 302 and 606 described above, so a detailed description thereof is omitted for reasons related to brevity.

At block 808, a determination can be made as to whether the contact device is using the same application as mobile device 104. When the application is launched, a query can be made to an application server in communication with registration server 108. In response to the query, a list of users can be returned who are on the same WiFi network as mobile device 104. The query to the registration server can include a request for a list of applications 220 that can be installed in or otherwise supported by mobile device 104. If configured, all mobile devices which run an application 220 can report active network status information and/or those applications supported by the mobile devices. This information can then be used to filter contacts in mobile device 104 when a supported application such as the abovementioned shopping application is opened. In an embodiment, the application can be a context-aware application, and the query can include a search for context-related information to determine if a user is actively performing other tasks, such as using the same shopping application. Thus, mobile device 104 can display only those contact devices which have a same application as mobile device 104.

At block 810, if registration server 108 establishes that a contact is in the same local network and/or that the contact is using the same application, then mobile device 104 can communicate with the contact via a common application, for example, the shopping application. The user can click a contact identified as running the same application and establish a connection with that contact.

Thus, method 800 can provide an approach for applications that use a native contact list to identify other contacts using that application. The user is not required to activate the application, then search for available users of the mall's WiFi network. Referring to the shopping application example, a user can activate the shopping application in a mall, and use a native contact list to determine which contacts are in the mall and are running the same shopping application. The user can connect with those contacts inside the shopping application without the need for maintaining a separate list because the application can filter the contact list and display only those contacts running the shopping application.

The systems and methods described herein can also be applied to a BYOD (bring your own device) environment, for example, an employer's local network, where mobile device users can switch between network service providers using their own mobile device. A call from a BYOD user to a phone outside of the BYOD environment may be undesirable for reasons related to cost, employee practices, and the like. In an embodiment, a BYOD user can distinguish calls that are permissible from calls that will be rejected by the call routing system or where the user will be subject to charges associated with the call.

The systems and methods can be applied in the service industry, for example, guest services, where a user can identify when colleagues or friends have checked into a hotel and are identified in the user's contact list as being available when their contact indicator, for example, a framed contact icon turns green. In another example, hospital staff availability can be determined by a user's mobile device displaying staff member status information, for example, a staff member contact having a framed icon displayed as red when the staff member is unavailable, or green when the staff member is available, or yellow when the staff member is presently on a call.

Accordingly, embodiments of the present invention address the well-known understanding that a key attribute for mobile application popularity arises from the ability to integrate the application with native phone features. The native contact list and corresponding interface, for example, a dialer, form the basis of most interactions between users. Thus, the ability to colour the frame to identify availability, either from a network perspective for calls or from an application perspective if the contacts are launched from within the application, is an important aspect when contact lists are used. Although the use of visual indicators such as coloured contact frames is referred herein, other embodiments include the use of distinguishing identifiers such as audible identifiers.

While the invention has been shown and described with reference to specific embodiments, it should be understood by those skilled in the art that various changes in form and detail may be made therein without departing from the invention as recited in the accompanying claims.

It should be also understood that many of the functional units described in this specification have been labeled as modules or systems, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

A storage device can include a computer readable storage medium, which may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment, or to separate embodiments. Unless features of "one embodiment" are inconsistent with features of other embodiments, the term "one embodiment" shall be construed to be a disclosure of the associated features in conjunction with all other features that are consistent therewith.

Furthermore, the described features, structures, or characteristics may be combined in any suitable manner in one or more embodiments. In the following description, numerous specific details are provided to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

## Claims

1. A method for determining a network relationship between a mobile device (104) and a contact stored in the mobile device (104), comprising:
associating the mobile device (104) with a network (116);
transmitting a request from the mobile device (104) for a set of contact devices (112,114,118) in a contact list of the mobile device (104) that are in the network (116);
generating a set of contact devices that includes at least one contact device (112) identified as being in the network (116); and
modifying a contact element corresponding to the identified contact device (112) to indicate that the identified contact is in the network (116);
wherein the method further comprises:
establishing whether or not a communication between the mobile device (104) and the contact would be subject to a charge; and
modifying the contact element corresponding to the identified contact device (112) to indicate whether or not the communication with the contact would be subject to a charge.

2. The method of claim 1, wherein generating the set of contact devices comprises:
registering a set of users of the network (116) with a server (108);
determining by the server (108) whether the users are currently active in the network (116); and
comparing the users currently active in the network (116) and the contacts in the contact list sent with the request.

3. The method of claim 2, further comprising:
determining by the server (108) whether the users include electronic devices (112,114,118) having an application that is the same as an application of the mobile device (104); and
displaying at the mobile device (104) a set of contact devices (112,114,118) identified as having the same application as the mobile device (104).

4. The method of claim 3, further comprising:
activating the application at the mobile device (104);
determining if the at least one contact device (112,114,118) is using the application; and
exchanging a communication between the mobile device (104) and the at least one contact device (112,114,118) via the application,
wherein the application may be a context-aware application.

5. The method of any one of the preceding claims, wherein modifying the contact element comprises:
activating a frame corresponding to the contact element; and
displaying an indicator having a colour to indicate whether the identified contact is in the network (116).

6. The method of claim 5, wherein the indicator includes a frame and wherein modifying the contact element includes displaying the frame having a first colour when the contact is identified as being in the network (116).

7. The method of claim 6, wherein modifying a contact element includes displaying the frame to have a second colour that is different from the first colour when the contact is identified as out of the network (116).

8. The method of claim 1, further comprising:
assigning a default colour to the network (116); and
modifying the contact element to have a same colour as the default colour assigned to the network (116),
wherein the method may further comprise configuring an access point list application to assign the default colour to the network (116).

9. A method according to claim 1, wherein:
generating a set of contact devices comprises:
opening a contact list in the mobile device (104); and
determining a first set of contacts on the contact list who are in the network (116) and a second set of contacts on the contact list who are not in the local network (116); and
modifying the contact element comprises:
modifying a contact indicator for each of the first set of contacts according to a first visual representation to identify the first set of contacts as being in the network (116); and
modifying a contact indicator for each of the second set of contacts according to a second visual representation to identify the second set of contacts as not being in the network (116).

10. The method of claim 9, wherein modifying the contact indicator comprises:
activating a frame corresponding to the contact indicator; and
displaying the frame having a colour to indicate whether a contact in the contact list is in the network (116).

11. A mobile device (104) comprising:
a wireless transmitter (210);
a wireless receiver (210);
a processor (202);
a computer readable storage medium (214) in communication with the processor, the memory (214) having computer readable program code embodied therewith that is executable by the processor (202), the computer readable program code comprising;
computer readable program code configured to store a contact list;
computer readable program code configured to transmit a request from the wireless transmitter (210) for a set of contact devices (112,114,118) in a contact list that are in a same network as the mobile device (104);
computer readable program code configured to receive via the wireless receiver (210) at least one contact device (112) identified as being at the same network (116) as the mobile device (104);
computer readable program code configured to modify a contact element corresponding to the identified contact device (112) to indicate that the identified contact is in the same network (116) as the mobile device (104);
computer readable program code configured to establish whether or not a communication between the mobile device (104) and the contact would be subject to a charge; and
computer readable program code configured to modify the contact element corresponding to the identified contact device (112) to indicate whether or not the communication with the contact would be subject to a charge.

12. The mobile device (104) of claim 11 or the method of any one of claims 1 to 10, wherein the mobile device (104) communicates via at least one of the wireless transmitter (210) and the wireless receiver (210) with a WiFi network, a Picocell network, a PBX cluster, or a coverage region of a carrier network.

13. The mobile device (104) of claim 11 or claim 12, wherein said computer readable program code, when executed by the processor (202), is arranged to perform the method of any one of claims 5 to 8.

14. The mobile device (104) of any one of claims 11 to 13, further comprising:
computer readable program code configured to determine whether the contact devices (112,114,118) in the contact list have a same application as the mobile device (104); and
computer readable program code configured to display a set of contact devices (112,114,118) identified as having the same application as the mobile device (104).

15. The mobile device (104) of claim 14, wherein the application is a context-aware application, and wherein the computer readable program code when executed by the processor (202) activates the context-aware application at the mobile device (104), determines if the at least one contact device (112,114,118) is using the application, and exchanges a communication between the mobile device (104) and the at least one contact device (112,114,118) via the application.

## Patentansprüche

1. Verfahren zur Bestimmung einer Netzwerkbeziehung zwischen einem mobilen Gerät (104) und einem in dem mobilen Gerät (104) gespeicherten Kontakt, umfassend:
Zuordnen des mobilen Geräts (104) zu einem Netz (116);
Übertragen einer von dem mobilen Gerät (104) ausgehenden Anforderung einer Gruppe von Kontaktgeräten (112, 114, 118) in einer Kontaktliste des mobilen Geräts (104), die sich im Netz (116) befinden;
Erstellen einer Gruppe von Kontaktgeräten, welche mindestens ein Kontaktgerät (112) einschließt, das als im Netz (116) befindlich erkannt wird, sowie
Ändern eines Kontaktelements in Übereinstimmung mit dem erkannten Kontaktgerät (112), um anzuzeigen, dass sich der erkannte Kontakt im Netz (116) befindet;
bei welchem das Verfahren ferner Folgendes umfasst:
Feststellen, ob eine Kommunikation zwischen dem mobilen Gerät (104) und dem Kontakt gebührenpflichtig wäre oder nicht, sowie
Ändern des Kontaktelements in Übereinstimmung mit dem erkannten Kontaktgerät (112), um anzuzeigen, ob die Kommunikation mit dem Kontakt gebührenpflichtig wäre oder nicht.

2. Verfahren nach Anspruch 1, bei welchem das Erzeugen einer Gruppe von Kontaktgeräten Folgendes umfasst:
Registrieren einer Gruppe von Benutzern des Netzes (116) bei einem Server (108),
Feststellen durch den Server (108), ob die Benutzer gerade in dem Netz (116) aktiv sind, sowie
Vergleichen der gegenwärtig im Netz (116) aktiven Benutzer mit den Kontakten in der mit der Anforderung übersandten Kontaktliste.

3. Verfahren nach Anspruch 2, ferner umfassend:
Feststellen durch den Server (108), ob zu den Benutzern elektronische Geräte (112, 114, 118) zählen, die über eine Anwendung verfügen, die dieselbe Anwendung ist wie eine Anwendung des mobilen Geräts (104), und
Anzeigen am mobilen Gerät (104) einer Gruppe von Kontaktgeräten (112, 114, 118), bei denen erkannt wurde, dass sie über dieselbe Anwendung wie das mobile Gerät (104) verfügen.

4. Verfahren nach Anspruch 3, ferner umfassend:
Aktivieren der Anwendung am mobilen Gerät (104),
Feststellen, ob das mindestens eine Kontaktgerät (112, 114, 118) die Anwendung benutzt, sowie
Austauschen einer Kommunikation zwischen dem mobilen Gerät (104) und dem mindestens einen Kontaktgerät (112, 114, 118) über die Anwendung,
bei welchem die Anwendung eine kontextsensitive Anwendung sein kann.

5. Verfahren nach einem beliebigen der vorhergehenden Ansprüche, bei welchem das Ändern des Kontaktelements Folgendes umfasst:
Aktivieren eines dem Kontaktelement entsprechenden Rahmens, sowie
Anzeigen eines Indikators, dessen Farbe anzeigt, ob sich ein erkannter Kontakt im Netz (116) befindet.

6. Verfahren nach Anspruch 5, bei welchem der Indikator einen Rahmen enthält, und bei welchem das Ändern des Kontaktelements die Anzeige des Rahmens mit einer ersten Farbe einschließt, wenn der Kontakt als im Netz (116) befindlich erkannt wird.

7. Verfahren nach Anspruch 6, bei welchem das Ändern eines Kontaktelements das Anzeigen eines Rahmens mit einer zweiten Farbe einschließt, die zur ersten Farbe unterschiedlich ist, wenn der Kontakt als außerhalb des Netzes (116) befindlich erkannt wird.

8. Verfahren nach Anspruch 1, ferner umfassend:
Zuweisen einer voreingestellten Farbe an das Netz (116), und
Ändern des Kontaktelements, sodass es dieselbe Farbe wie die dem Netz (116) zugewiesene voreingestellte Farbe hat,
bei welchem das Verfahren ferner das Konfigurieren einer Zugangspunktlistenanwendung zur Zuweisung der voreingestellten Farbe an das Netz (116) umfassen kann.

9. Verfahren nach Anspruch 1, bei welchem:
das Erstellen einer Gruppe von Kontaktgeräten Folgendes umfasst:
Öffnen einer Kontaktliste im mobilen Gerät (104), sowie
Bestimmen einer ersten Gruppe von Kontakten in der Kontaktliste, die sich im Netz (116) befinden, und einer zweiten Gruppe von Kontakten in der Kontaktliste, die sich nicht im lokalen Netz (116) befinden, und
Ändern der Kontaktelemente Folgendes umfasst:
Ändern eines Kontaktindikators für jeden der ersten Gruppe von Kontakten in Übereinstimmung mit einer ersten visuellen Darstellung, um die erste Gruppe von Kontakten als im Netz (116) befindlich zu erkennen, und
Ändern eines Kontaktindikators für jeden der zweiten Gruppe von Kontakten in Übereinstimmung mit einer zweiten visuellen Darstellung, um die zweite Gruppe von Kontakten als nicht im Netz (116) befindlich zu erkennen.

10. Verfahren nach Anspruch 9, bei welchem das Ändern des Kontakindikators Folgendes umfasst:
Aktivieren eines dem Kontaktindikator entsprechenden Rahmens, sowie
Anzeigen eines Rahmens, dessen Farbe anzeigt, ob sich ein Kontakt in der Kontaktliste im Netz (116) befindet.

11. Ein mobiles Gerät (104), umfassend:
einen drahtlosen Sender (210),
einen drahtlosen Empfänger (210),
einen Prozessor (202),
ein computerlesbares Speichermedium (214) in Kommunikation mit dem Prozessor, wobei der Speicher (214) über in diesem enthaltenen computerlesbaren Programmcode verfügt, der vom Prozessor (202) ausführbar ist, und wobei der computerlesbare Programmcode Folgendes umfasst:
computerlesbaren Programmcode, der ausgelegt ist, um eine Kontaktliste zu speichern;
computerlesbaren Programmcode, der ausgelegt ist, um eine von dem drahtlosen Sender (210) gestellte Anforderung einer in einer Kontaktliste befindlichen Gruppe von Kontaktgeräten (112, 114, 118) zu übertragen, die sich in demselben Netz wie das mobile Gerät (104) befinden;
computerlesbaren Programmcode, der ausgelegt ist, um über den drahtlosen Empfänger (210) mindestens ein Kontaktgerät (112) zu empfangen, das als in demselben Netz (116) wie das mobile Gerät (104) befindlich erkannt wurde;
computerlesbaren Programmcode, der ausgelegt ist, um ein dem erkannten Kontaktgerät (112) entsprechendes Kontaktelement zu ändern, um anzuzeigen, dass sich der erkannte Kontakt in demselben Netz (116) wie das mobile Gerät (104) befindet;
computerlesbaren Programmcode, der ausgelegt ist, um festzustellen, ob eine Kommunikation zwischen dem mobilen Gerät (104) und dem Kontakt gebührenpflichtig wäre oder nicht, sowie
computerlesbaren Programmcode, der ausgelegt ist, um das Kontaktelement in Übereinstimmung mit dem erkannten Kontaktgerät (112) zu ändern, um anzuzeigen, ob die Kommunikation mit dem Kontakt gebührenpflichtig wäre oder nicht.

12. Mobiles Gerät (104) nach Anspruch 11 oder das Verfahren nach einem beliebigen der Ansprüche 1 bis 10, bei welchem das mobile Gerät (104) über mindestens einen des drahtlosen Senders (210) und des drahtlosen Empfängers (210) mit einem Wi-Fi-Netz, einem Picocell-Netz, einem PBX-Cluster oder einer Abdeckungsregion eines Betreibernetzes kommuniziert.

13. Mobiles Gerät (104) nach Anspruch 11 oder Anspruch 12, bei welchem der genannte computerlesbare Programmcode, sobald er vom Prozessor (202) ausgeführt wird, so angeordnet ist, dass er das Verfahren eines beliebigen der Ansprüche 5 bis 8 ausführt.

14. Mobiles Gerät (104) nach einem der Ansprüche 11 bis 13, ferner umfassend:
computerlesbaren Programmcode, der ausgelegt ist, um festzustellen, ob die Kontaktgeräte (112, 114, 118) in der Kontaktliste über dieselbe Anwendung wie das mobile Gerät (104) verfügen, und
computerlesbaren Programmcode, der ausgelegt ist, um eine Gruppe von Kontaktvorrichtungen (112, 114, 118) anzuzeigen, bei denen erkannt wurde, dass sie über dieselbe Anwendung wie das mobile Gerät (104) verfügen.

15. Mobiles Gerät (104) nach Anspruch 14, bei welchem die Anwendung eine kontextsensitive Anwendung ist, und bei welchem der computerlesbare Programmcode, wenn er von dem Prozessor (202) ausgeführt wird, die kontextsensitive Anwendung auf dem mobilen Gerät (104) aktiviert, feststellt, ob das mindestens eine Kontaktgerät (112, 114, 118) die Anwendung verwendet, und eine Kommunikation zwischen dem mobilen Gerät (104) und dem mindestens einen Kontaktgerät (112, 114, 118) über die Anwendung austauscht.

## Revendications

1. Procédé destiné à déterminer une relation de réseau entre un dispositif mobile (104) et un contact stocké dans le dispositif mobile (104), comprenant les opérations consistant à :
associer le dispositif mobile (104) à un réseau (116) ;
transmettre une demande provenant du dispositif mobile (104) pour un ensemble de dispositifs-contacts (112, 114, 118), dans une liste de contacts du dispositif mobile (104), qui se trouvent dans le réseau (116) ;
générer un ensemble de dispositifs-contacts qui englobe au moins un dispositif-contact (112) qui a été identifié comme étant dans le réseau (116) ; et
modifier un élément de contact correspondant au dispositif-contact identifié (112) afin d'indiquer que le contact identifié est dans le réseau (116) ;
cas dans lequel le procédé comprend en outre les opérations consistant à :
établir si, oui ou non, une communication entre le dispositif mobile (104) et le contact ferait l'objet d'une taxation ; et
modifier l'élément de contact correspondant au dispositif-contact identifié (112) afin d'indiquer si, oui ou non, la communication avec le contact ferait l'objet d'une taxation.

2. Procédé selon la revendication 1, la génération de l'ensemble de dispositifs-contacts comprenant les opérations consistant à :
enregistrer un ensemble d'utilisateurs du réseau (116) auprès d'un serveur (108) ;
faire déterminer, par le serveur (108), si les utilisateurs sont actuellement actifs dans le réseau (116) ; et
comparer les utilisateurs qui sont actuellement actifs dans le réseau (116) et les contacts figurant dans la liste de contacts envoyée avec la demande.

3. Procédé selon la revendication 2, comprenant en outre les opérations consistant à :
faire déterminer, par le serveur (108), si les utilisateurs englobent des dispositifs électroniques (112, 114, 118) lesquels possèdent une application qui est la même qu'une application du dispositif mobile (104) ; et
afficher, au niveau du dispositif mobile (104), un ensemble de dispositifs-contacts (112, 114, 118) lesquels ont été identifiés comme possédant la même application que le dispositif mobile (104).

4. Procédé selon la revendication 3, comprenant en outre les opérations consistant à :
activer l'application au niveau du dispositif mobile (104) ;
déterminer si ledit au moins un dispositif-contact (112, 114, 118) est en train d'utiliser l'application ; et
échanger une communication entre le dispositif mobile (104) et ledit au moins un dispositif-contact (112, 114, 118) par l'intermédiaire de l'application,
cas dans lequel l'application est éventuellement une application sensible au contexte.

5. Procédé selon l'une quelconque des revendications précédentes, la modification de l'élément de contact comprenant les opérations consistant à :
activer une trame correspondant à l'élément de contact ; et
afficher un indicateur avec une couleur visant à indiquer si le contact identifié est dans le réseau (116).

6. Procédé selon la revendication 5, l'indicateur englobant une trame et la modification de l'élément de contact englobant l'affichage de la trame avec une première couleur lorsque le contact a été identifié comme étant dans le réseau (116).

7. Procédé selon la revendication 6, la modification d'un élément de contact englobant l'affichage de la trame pour qu'elle ait une seconde couleur, laquelle est différente de la première couleur, lorsque le contact a été identifié comme étant hors du réseau (116).

8. Procédé selon la revendication 1, comprenant en outre les opérations consistant à :
attribuer une couleur par défaut au réseau (116) ; et
modifier l'élément de contact pour qu'il ait la même couleur que la couleur par défaut ayant été attribuée au réseau (116),
cas dans lequel le procédé peut éventuellement comprendre en outre la configuration d'une application Liste de points d'accès afin d'attribuer la couleur par défaut au réseau (116).

9. Procédé selon la revendication 1,
la génération d'un ensemble de dispositifs-contacts comprenant les opérations consistant à :
ouvrir une liste de contacts dans le dispositif mobile (104) ; et
déterminer un premier ensemble de contacts, sur la liste de contacts, qui se trouvent dans le réseau (116), et un second ensemble de contacts, sur la liste de contacts qui ne se trouvent pas dans le réseau local (116) ; et
la modification de l'élément de contact comprenant les opérations consistant à :
modifier un indicateur de contact pour chaque contact du premier ensemble de contacts, en fonction d'une première représentation visuelle destinée à identifier le premier ensemble de contacts comme étant dans le réseau (116) ; et
modifier un indicateur de contact pour chaque contact du second ensemble de contacts, en fonction d'une seconde représentation visuelle destinée à identifier le second ensemble de contacts comme n'étant pas dans le réseau (116).

10. Procédé selon la revendication 9, la modification de l'indicateur de contact comprenant les opérations consistant à :
activer une trame correspondant à l'indicateur de contact ; et
afficher la trame avec une couleur visant à indiquer si un contact, figurant dans la liste de contacts, est dans le réseau (116).

11. Dispositif mobile (104), comprenant :
un émetteur sans fil (210) ;
un récepteur sans fil (210) ;
un processeur (202) ;
un support de stockage lisible par ordinateur (214), en communication avec le processeur, la mémoire (214) possédant un code-programme lisible par ordinateur qui est intégré à celle-ci, lequel est exécutable par le processeur (202), le code-programme lisible par ordinateur comprenant :
un code-programme lisible par ordinateur configuré de façon à stocker une liste de contacts ;
un code-programme lisible par ordinateur configuré de façon à transmettre une demande provenant de l'émetteur sans fil (210) pour un ensemble de dispositifs-contacts (112, 114, 118), dans une liste de contacts, qui se trouvent dans le même réseau que le dispositif mobile (104) ;
un code-programme lisible par ordinateur configuré de façon à recevoir, par l'intermédiaire du récepteur sans fil (210), au moins un dispositif-contact (112) qui a été identifié comme étant situé au niveau du même réseau (116) que le dispositif mobile (104) ;
un code-programme lisible par ordinateur configuré de façon à modifier un élément de contact correspondant au dispositif-contact identifié (112) afin d'indiquer que le contact identifié est dans le même réseau (116) que le dispositif mobile (104) ;
un code-programme lisible par ordinateur configuré de façon à établir si, oui ou non, une communication entre le dispositif mobile (104) et le contact ferait l'objet d'une taxation ; et
un code-programme lisible par ordinateur configuré de façon à modifier l'élément de contact correspondant au dispositif-contact identifié (112) afin d'indiquer si, oui ou non, la communication avec le contact ferait l'objet d'une taxation.

12. Dispositif mobile (104) selon la revendication 11, ou procédé selon l'une quelconque des revendications 1 à 10, le dispositif mobile (104) communiquant par l'intermédiaire de l'un au moins des postes suivants, à savoir l'émetteur sans fil (210) et le récepteur sans fil (210), avec un réseau WiFi, un réseau Picocell, une grappe de PBX, ou une région de couverture d'un réseau de transport.

13. Dispositif mobile (104) selon la revendication 11 ou la revendication 12, ledit code-programme lisible par ordinateur, lorsqu'il est exécuté par le processeur (202), étant agencé de façon à concrétiser le procédé selon l'une quelconque des revendications 5 à 8.

14. Dispositif mobile (104) selon l'une quelconque des revendications 11 à 13, comprenant en outre :
un code-programme lisible par ordinateur configuré de façon à déterminer si les dispositifs-contacts (112, 114, 118), dans la liste de contacts, possèdent la même application que le dispositif mobile (104) ; et
un code-programme lisible par ordinateur configuré de façon à afficher un ensemble de dispositifs-contacts (112, 114, 118) qui a été identifié comme possédant la même application que le dispositif mobile (104).

15. Dispositif mobile (104) selon la revendication 14, l'application étant une application sensible au contexte, et le code-programme lisible par ordinateur, lorsqu'il est exécuté par le processeur (202), activant l'application sensible au contexte au niveau du dispositif mobile (104), déterminant si ledit au moins un dispositif-contact (112, 114, 118) est en train d'utiliser l'application, et échangeant une communication entre le dispositif mobile (104) et ledit au moins un dispositif-contact (112, 114, 118) par l'intermédiaire de l'application.
